# EUROPEAN PATENT APPLICATION

(11) **EP 3 771 268 A1**
(43) Date of publication of application: **27.01.2021**
(21) Application number: 18911687.4
(22) Date of filing: 30.03.2018
(51) Int. Cl.: H04W 72/04

(54) **SIGNAL TRANSMISSION METHOD AND DEVICE**

(71) Applicant: GUANGDONG OPPO MOBILE TELECOMMUNICATIONS CORP., LTD., Wusha, Chang'an Dongguan Guangdong 523860 (CN)
(72) Inventor: SHI, Zhihua, Dongguan, Guangdong 523860 (CN)
(74) Representative: Manitz Finsterwald Patent- und Rechtsanwaltspartnerschaft mbB
(86) International application number: PCT/CN2018/081465
(87) International publication number: WO 2019/183970

(57) **Abstract**

Disclosed are a signal transmission method and device, comprising: a terminal device determines quasi-co-location (QCL) information of an energy-saving signal; the terminal device receives the energy-saving signal on the basis of the QCL information, or the terminal device receives a PDCCH in a physical downlink control channel (PDCCH) control resource set on the basis of the QCL information. Therefore, the terminal device can receive the energy-saving signal on the basis of the QCL information of the energy-saving signal by determining the QCL information of the energy-saving signal, thereby improving transmission performance of the energy-saving signal.

## Description

### TECHNICAL FIELD

Embodiments of the present application relate to the field of communications, and more specifically, to a signal transmission method and device.

### BACKGROUND

Discontinuous Reception (DRX) mechanism is introduced for the sake of saving power of a terminal device. Each DRX Cycle includes an "On Duration" and an "Opportunity for DRX". When in the "On Duration", the terminal device detects a control channel, while in the "Opportunity for DRX" (also called sleep) duration, the terminal device can reduce power consumption by stopping receiving the control channel (in this case, the terminal device will stop blind detection of the control channel), thereby improving battery life.

In a 5G system, a power saving signal is introduced to control a state of a terminal device to achieve a power saving purpose. For example, the power saving signal may be a wake-up signal, which is used to indicate the terminal device to wake up in the "On Duration" in a DRX cycle. The terminal device will wake up in the "On Duration" to detect a PDCCH if the wake-up signal is received, and the terminal device will not perform PDCCH detection if the wake-up signal is not received.

Therefore, how to ensure transmission performance of such power saving signals has become an urgent problem to be solved.

### SUMMARY

Embodiments of the present application provide a signal transmission method and device, which can improve transmission performance of a power saving signal and other signals associated with the power saving signal.

In a first aspect, a signal transmission method is provided, including: a terminal device determines Quasi-Co-Location (QCL) information of a power saving signal; and the terminal device receives the power saving signal on the basis of the QCL information, or the terminal device receives a Physical Downlink Control Channel (PDCCH) in a PDCCH control resource set on the basis of the QCL information.

Therefore, according to an embodiment of this application, the terminal device can receive the power saving signal on the basis of the QCL information of the power saving signal by determining the QCL information of the power saving signal, thereby improving transmission performance of the power saving signal.

With reference to the first aspect, in a possible implementation manner of the first aspect, the QCL information includes QCL information in at least one of the following: delay spread, Doppler spread, Doppler shift, average delay and spatial Rx parameters.

With reference to the first aspect or any one of the foregoing possible implementation manners, in another possible implementation manner of the first aspect, the terminal device determining the QCL information of the power saving signal includes: the terminal device determines the QCL information of the power saving signal according to Transmission Configuration Indication (TCI) information of the PDCCH, wherein, the TCI information of the PDCCH is used to indicate that QCL information of an antenna port of a De Modulation Reference Signal (DMRS) used by the PDCCH is received in the PDCCH control resource set; or, the terminal device receives configuration information sent by a network device, the configuration information being used to indicate the QCL information.

With reference to the first aspect or any one of the foregoing possible implementation manners, in another possible implementation manner of the first aspect, the terminal device determining the QCL information of the power saving signal according to the Transmission Configuration Indication (TCI) information of the PDCCH includes: the terminal device determines that the QCL information of the power saving signal is TCI information of the PDCCH control resource set associated with the power saving signal. Wherein, the PDCCH control resource set associated with the power saving signal is a PDCCH control resource set that satisfies a predetermined relationship in a time domain and/or frequency domain with the power saving signal.

With reference to the first aspect or any one of the foregoing possible implementation manners, in another possible implementation manner of the first aspect, the terminal device determining the QCL information of the power saving signal according to the Transmission Configuration Indication (TCI) information of the PDCCH includes: if the terminal device is about to enter an "On Duration" in a Discontinuous Reception (DRX) cycle from an "Opportunity for DRX" in the DRX cycle, the terminal device determines that the QCL information of the power saving signal is TCI information of a specific PDCCH control resource set in the "On Duration".

Since the terminal device may determine the QCL information of the power saving signal on the basis of the TCI information of the PDCCH control resource set, for example, it is assumed that the QCL information of the power saving signal is the TCI information of the corresponding PDCCH control resource set, by establishing a QCL relationship between the power saving signal and the PDCCH control resource set, the terminal device may receive the power saving signal on the basis of reception information of the PDCCH, or receive the PDCCH on the basis of reception information of the power saving signal, thereby improving transmission performance of the PDCCH and the power saving signal.

With reference to the first aspect or any one of the foregoing possible implementation manners, in another possible implementation manner of the first aspect, the specific PDCCH control resource set is a first PDCCH control resource set in the "On Duration".

With reference to the first aspect or any one of the foregoing possible implementation manners, in another possible implementation manner of the first aspect, the TCI information of the PDCCH control resource set at different time domain positions is same or different.

With reference to the first aspect or any one of the foregoing possible implementation manners, in another possible implementation manner of the first aspect, the QCL information includes QCL information in terms of the spatial Rx parameters, wherein, the terminal device receiving the power saving signal on the basis of the QCL information includes: the terminal device receives the power saving signal by using a reception beam of the PDCCH and the spatial Rx parameters corresponding to the reception beam.

With reference to the first aspect or any one of the foregoing possible implementation manners, in another possible implementation manner of the first aspect, the method further includes: the terminal device performs time-frequency synchronization on the basis of the power saving signal, and obtains time-frequency synchronization parameters of the power saving signal; wherein, the terminal device receiving the PDCCH in the PDCCH control resource set on the basis of the QCL information includes: the terminal device receives the PDCCH in the PDCCH control resource set by using the time-frequency synchronization parameters of the power saving signal.

With reference to the first aspect or any one of the foregoing possible implementation manners, in another possible implementation manner of the first aspect, the method further includes: the terminal device determines a timing relationship between the power saving signal and the PDCCH control resource set; wherein, the terminal device receiving the power saving signal on the basis of the QCL information includes: the terminal device receives the power saving signal on the basis of the QCL information and the timing relationship; the terminal device receiving the PDCCH in the PDCCH control resource set on the basis of the QCL information includes: the terminal device receives the PDCCH in the PDCCH control resource set on the basis of the QCL information and the timing relationship.

In a second aspect, a signal transmission method is provided, including: a network device sends a power saving signal, and sends a Physical Downlink Control Channel (PDCCH) in a PDCCH control resource set, to allow a terminal device receives the power saving signal on the basis of Quasi-Co-Location (QCL) information of the power saving signal, or receives the PDCCH in the PDCCH control resource set.

Therefore, when the network device sends the power saving signal and the PDCCH, by using a same transmission parameter, such as a sending beam, etc., it allows the terminal device to receive the power saving signal on the basis of the QCL information of the power saving signal according to the QCL information of the power saving signal, thereby improving transmission performance of the power saving signal.

With reference to the second aspect, in a possible implementation manner of the second aspect, the QCL information includes QCL information in at least one of the following: delay spread, Doppler spread, Doppler shift, average delay and spatial Rx parameters.

With reference to the second aspect or any one of the foregoing possible implementation manners, in another possible implementation manner of the second aspect, the method further includes: the network device sends configuration information to the terminal device, and the configuration information is used to indicate the QCL information.

With reference to the second aspect or any one of the foregoing possible implementation manners, in another possible implementation manner of the second aspect, the QCL information of the power saving signal is TCI information of the PDCCH control resource set associated with the power saving signal. Wherein, the PDCCH control resource set associated with the power saving signal is a PDCCH control resource set that satisfies a predetermined relationship in a time domain and/or frequency domain with the power saving signal, and TCI information of the PDCCH is used to indicate that QCL information of an antenna port of a De Modulation Reference Signal (DMRS) used by the PDCCH is sent in the PDCCH control resource set.

With reference to the second aspect or any one of the foregoing possible implementation manners, in another possible implementation manner of the second aspect, the QCL information of the power saving signal is TCI information of a specific PDCCH control resource set in an "On Duration" in a Discontinuous Reception (DRX) cycle.

With reference to the second aspect or any one of the foregoing possible implementation manners, in another possible implementation manner of the second aspect, the specific PDCCH control resource set is a first PDCCH control resource set in the "On Duration".

With reference to the second aspect or any one of the foregoing possible implementation manners, in another possible implementation manner of the second aspect, the TCI information of the PDCCH control resource set at different time domain positions is same or different.

With reference to the second aspect or any one of the foregoing possible implementation manners, in another possible implementation manner of the second aspect, the QCL information includes QCL information in terms of spatial sending parameters. Wherein, the network device sending the power saving signal, and sending the PDCCH in the PDCCH control resource set includes: the network device sends the PDCCH in the PDCCH control resource set, and sends the power saving signal associated with the PDCCH by using a sending beam of the PDCCH.

With reference to the second aspect or any one of the foregoing possible implementation manners, in another possible implementation manner of the second aspect, the method further includes: the network device determines a timing relationship between the power saving signal and the PDCCH control resource set;

wherein, the network device sending the power saving signal and sending the PDCCH in the PDCCH control resource set includes: the network device sends the power saving signal, and sends the PDCCH in the PDCCH control resource set according to the timing relationship.

In a third aspect, a terminal device is provided, which may perform operations of the terminal device in the first aspect or any optional implementation manner of the first aspect. Specifically, the terminal device may include the terminal device in the first aspect or any possible implementation manner of the first aspect.

In a fourth aspect, a network device is provided, which may perform operations of the network device in the second aspect or any optional implementation manner of the second aspect. Specifically, the network device may include the network device in the second aspect or any possible implementation manner of the second aspect.

In a fifth aspect, a terminal device is provided. The terminal device includes: a processor, a transceiver, and a memory. Wherein, the processor, transceiver and memory communicate with each other through internal connection channels. The memory is configured to store instructions, and the processor is configured to execute instructions stored in the memory. When the processor executes the instructions stored in the memory, the execution causes the terminal device to execute the method in the first aspect or any possible implementation manner of the first aspect, or the execution causes the terminal device to implement the terminal device provided in the third aspect.

In a sixth aspect, a network device is provided. The network device includes: a processor, a transceiver, and a memory. Wherein, the processor, transceiver and memory communicate with each other through internal connection channels. The memory is configured to store instructions, and the processor is configured to execute instructions stored in the memory. When the processor executes the instructions stored in the memory, the execution causes the network device to execute the method in the second aspect or any possible implementation manner of the second aspect, or the execution causes the network device to implement the network device provided in the fourth aspect.

In a seventh aspect, a system chip is provided. The system chip includes an input interface, an output interface, a processor, and a memory. The processor is configured to execute instructions stored in the memory. When the instructions are executed, the processor may implement the foregoing first aspect or the method in any possible implementation manner of the first aspect.

According to an eighth aspect, a system chip is provided. The system chip includes an input interface, an output interface, a processor, and a memory. The processor is configured to execute instructions stored in the memory. When the instructions are executed, the processor may implement the foregoing second aspect or the method in any possible implementation manner of the second aspect.

In a ninth aspect, a computer program product is provided including instructions. When running on a computer, the computer program product causes the computer to execute the method in the first aspect or any possible implementation manner of the first aspect.

In a tenth aspect, a computer program product is provided including instructions. When running on a computer, the computer program product causes the computer to execute the method in the second aspect or any possible implementation manner of the second aspect.

### BRIEF DESCRIPTION OF THE DRAWINGS

FIG. 1 is a schematic diagram of a possible wireless communication system applied in an embodiment of the present application.
FIG. 2 is a schematic diagram of a DRX cycle.
FIG. 3 is a flow interaction diagram of a signal transmission method according to an embodiment of the present application.
FIG. 4 is a schematic diagram of a power saving signal and a PDCCH control resource set according to an embodiment of the present application.
FIG. 5 is a schematic diagram of a power saving signal and a PDCCH control resource set according to an embodiment of the present application.
FIG. 6 is a schematic block diagram of a terminal device according to an embodiment of the present application.
FIG. 7 is a schematic block diagram of a network device according to an embodiment of the present application.
FIG. 8 is a schematic structural diagram of a communication device according to an embodiment of the present application.
FIG. 9 is a schematic structural diagram of a system chip according to an embodiment of the present application.

### DETAILED DESCRIPTION

The technical solutions of the embodiments of the present application may be applied to various communication systems, such as: a Global System of Mobile communication (GSM) system, a Code Division Multiple Access (CDMA) System, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD) system, a Universal Mobile Telecommunication System (UMTS), a Worldwide Interoperability for Microwave Access (WiMAX) communication system or a future 5G system.

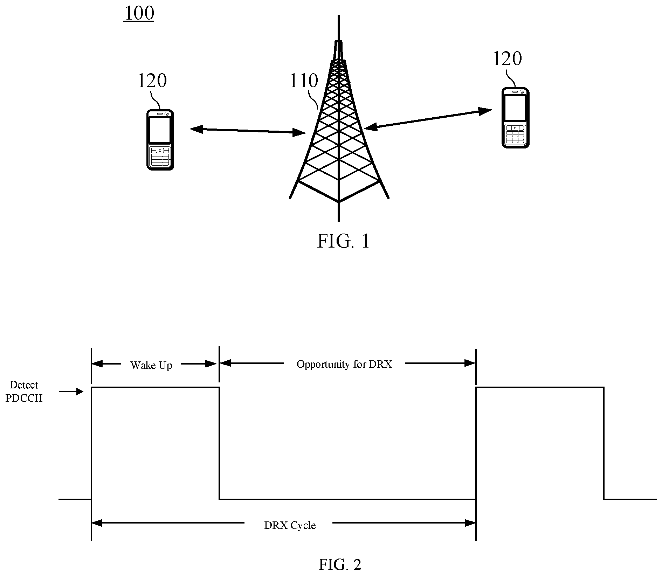

FIG. 1 shows a wireless communication system 100 applied in an embodiment of the present application. The wireless communication system 100 may include a network device 110. The network device 100 may be a device that communicates with a terminal device. The network device 100 may provide communication coverage for a specific geographic area, and may communicate with a terminal device (e.g., UE) located in the coverage area. Optionally, the network device 100 may be a Base Transceiver Station (BTS) in a GSM system or a CDMA system, or a NodeB (NB) in a WCDMA system, or an Evolutional Node B (eNB or eNodeB) in an LTE system, or a wireless controller in a Cloud Radio Access Network (CRAN), or the network device may be a relay station, an access point, a vehicle-mounted device, a wearable device, a network-side device in a future 5G network, or a network device in a Public Land Mobile Network (PLMN) that evolves in the future.

The wireless communication system 100 further includes at least one terminal device 120 located within the coverage of the network device 110. The terminal device 120 may be mobile or fixed. Alternatively, the terminal device 120 may refer to an access terminal, User Equipment (UE), a user unit, a user station, a moving station, a mobile station, a remote station, a remote terminal, a mobile device, a user terminal, a terminal, a wireless communication device, a user agent, or a user device. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modem, a vehicle-mounted device, a wearable device, a terminal device in a future 5G network or terminal device in a future evolved PLMN, etc. Wherein, optionally, Device to Device (D2D) communication may also be performed between the terminal devices 120.

FIG. 1 exemplarily shows one network device and two terminal devices. Optionally, the wireless communication system 100 may include a plurality of network devices and each of the network devices may include other numbers of terminal devices within the coverage area, which is not limited in the embodiments of the present application.

Optionally, the wireless communication system 100 may further include other network entities such as a network controller and a mobility management entity, which is not limited in the embodiments of the present application.

A DRX cycle of the terminal device includes an "On Duration" and an "Opportunity for DRX". As shown in FIG. 2, the terminal device may detect a Physical Downlink Control Channel (PDCCH) during the "On Duration", while the terminal device may reduce power consumption by stopping receiving PDCCH during the "Opportunity for DRX" (in this case, the terminal device will stop blind detection of PDCCH or paging messages), thereby improving battery usage time. In other words, during a wake-up duration, the terminal device is in a wake-up state to detect the PDCCH, and during the "Opportunity for DRX", the terminal device enters a sleep state so that no channel or signal is detected.

Although the network configures the terminal device with a DRX cycle, allowing the terminal device to periodically detect the PDCCH during the "On Duration", the terminal device is only scheduled opportunistically during the "On Duration". Even when having a low traffic load, the terminal device will be scheduled only in few DRX cycles. For paging messages that use a DRX mechanism, the terminal device receives fewer paging messages. Therefore, after being configured with the DRX mechanism, the terminal device may not detect a control channel during the "On Duration" of most DRX cycles, but it will still be woken up during the "On Duration" of these DRX cycles, which increases unnecessary power consumption of the terminal device.

Therefore, a 5G system introduces a power saving signal for controlling the state of the terminal device to achieve the purpose of saving energy. The power power saving signal is used to control the wake-up and sleep states of the terminal device, thereby reducing the power consumption of the terminal device. For example, the power saving signal may be a wake-up signal, and the wake-up signal is used to indicate the terminal device to wake up in the "On Duration" in the DRX cycle, when detecting the wake-up signal, the terminal device may wake up in one or more "On Durations" to detect the PDCCH, and when not detecting the wake-up signal, the terminal device may remain in the sleep state without performing PDCCH detection in one or more subsequent "On Durations"; or, the wake-up signal is used to indicate the terminal device to sleep during the "On Duration" in the DRX cycle, when not detecting the wake-up signal, the terminal device may wake up normally to detect the PDCCH in one or more "On Durations", and when detecting the wake-up signal, the terminal device may remain in the sleep state in one or more subsequent "On Durations" without performing PDCCH detection. Because this type of indication information is beneficial to power saving of the terminal device, it is referred to as power saving signal.

Improving the transmission performance of the power saving signal may help the terminal device to further save energy. Therefore, the embodiments of the present application propose that the power saving signal determines quasi-co-located (QCL) information to improve reception performance of the power saving signal and other related signals.

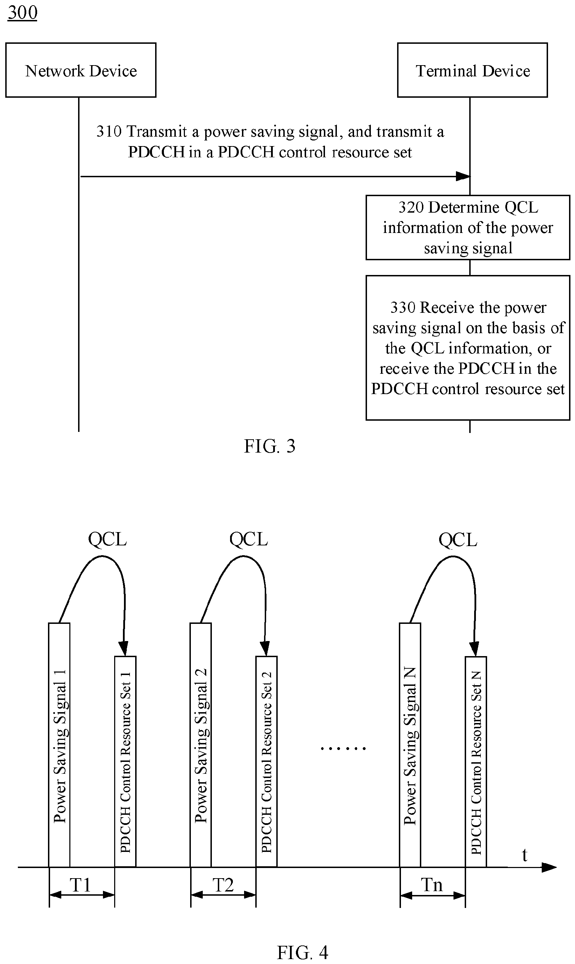

FIG. 3 is a process interaction diagram of a signal transmission method 300 according to an embodiment of the present application. The terminal device shown in FIG. 3 may be, for example, the terminal device 120 shown in FIG. 1. The network device shown in FIG. 3 may be, for example, the network device 110 shown in FIG. 1. As shown in FIG. 3, the signal transmission method 300 includes:
In Step 310, a network device sends a power saving signal, and sends a PDCCH in a PDCCH control resource set.

It may be understood that the network device may send the power saving signal to a terminal device on the basis of QCL information of the power saving signal, and send the PDCCH in the PDCCH control resource set so that when receiving the power saving signal or the PDCCH, the terminal device may receive the power saving signal on the basis of the QCL information of the power saving signal or receive the PDCCH in the PDCCH control resource set.

Optionally, the method further includes: the network device sends configuration information to the terminal device, where the configuration information is used to indicate the QCL information.

In Step 320, the terminal device determines the QCL information of the power saving signal.

Optionally, in Step 320, the terminal device determining the QCL information of the power saving signal includes: the terminal device determines the QCL information of the power saving signal according to transmission configuration indication (TCI) information of the PDCCH.

Or, optionally, in Step 320, the terminal device receives configuration information sent by the network device, wherein the configuration information is used to indicate the QCL information.

Wherein, the TCI information of the PDCCH is used to indicate that QCL information of an antenna port of a De Modulation Reference Signal (DMRS) used by the PDCCH is received in the PDCCH control resource set.

In a 5G system, a concept of Control Resource Set (CORESET) is introduced to define a time-frequency resource set carrying control information. The terminal device detects the PDCCH channel in the time-frequency resource set to obtain scheduling information. The configuration information of CORESET may include, for example, frequency domain resource information, time domain resource information, time length information, and so on. In addition, the configuration information of CORESET may also include TCI information. The TCI information is used to indicate that the QCL information of the antenna port of the DMRS used by the PDCCH is sent in the PDCCH control resource set.

In an embodiment of the present application, the QCL information of the power saving signal may also be called TCI information of the power saving signal.

For example, if there is a QCL relationship between a receiving port of the PDCCH transmitted in the PDCCH control resource set and a receiving port of Synchronizing Signal Block (SS Block or SSB) 1, the TCI information may be used to indicate the QCL relationship between the receiving port of the PDCCH and the receiving port of the SSB 1.

If there is a QCL relationship with the receiving port of the PDCCH transmitted in the PDCCH control resource set and a receiving port of SSB 2, the TCI information may be used to indicate the QCL relationship between the receiving port of the PDCCH and the receiving port of the SSB 2.

If there are N antenna ports used to send N SSBs respectively, then there is a QCL set that includes N QCL information, which are QCL information of SSB 1, QCL information of SSB 2, ..., QCL information of SSB N. The TCI information of the PDCCH control resource set may indicate QCL information of one of the N SSBs, so that the terminal device receives the PDCCH in the PDCCH control resource set on the basis of QCL information of said SSB, that is, the terminal device may assume there is a QCL relationship between reception of the PDCCH and reception of said SSB.

In this case, optionally, if the QCL information of the power saving signal is the same as the TCI information of the PDCCH, it may be understood that the QCL relationship is satisfied between the power saving signal and the PDCCH. Then, the QCL information of the power saving signal may also indicate: the QCL relationship is satisfied between an antenna port of the DMRS receiving the PDCCH in the PDCCH control resource set, and an antenna port of the DMRS associated with the reception of the power saving signal.

In this embodiment, the antenna port of the DMRS associated with the reception of the power saving signal may be understood as an antenna port of the DMRS used to transmit the power saving signal. However, when the power saving signal does not carry a DMRS sequence, for example, the power saving signal itself is a sequence, then an antenna port of the DMRS is still associated with the power saving signal. The antenna port of the DMRS is the antenna port of the DMRS associated with the reception of the power saving signal, and the power saving signal may be mapped to the antenna port of the DMRS associated with the power saving signal for transmission.

Optionally, the QCL information includes QCL information in at least one of the following: delay spread, Doppler spread, Doppler shift, average delay and spatial Rx parameters.

That is, there is a QCL relationship in terms of one or several of the delay spread, Doppler spread, Doppler shift, average delay and spatial Rx parameters between the antenna port of the DMRS associated with the reception of the power saving signal and the antenna port of the DMRS of the PDCCH in the PDCCH control resource set.

For example, when the QCL relationship is satisfied between the power saving signal and the PDCCH in terms of the average delay and delay spread. The terminal device may obtain a time synchronization deviation of the PDCCH in the PDCCH control resource set on the basis of estimation of a time synchronization deviation of the power saving signal.

For another example, when the power saving signal and the PDCCH control resource set satisfy the QCL relationship in terms of the Doppler spread and Doppler shift, the terminal device may obtain a frequency synchronization deviation of the PDCCH in the PDCCH control resource set on the basis of estimation of a frequency deviation of the power saving signal. Further, the terminal device may compensate a time-frequency deviation of the PDCCH on the basis of the obtained time synchronization deviation of the PDCCH and the frequency synchronization deviation of the PDCCH, so as to improve the reception performance of the PDCCH.

For another example, when the power saving signal and the PDCCH control resource set satisfy the QCL relationship in terms of the spatial Rx parameters, the network device may send the power saving signal and send the PDCCH in the PDCCH control resource set by using a same sending beam. The terminal device may detect the power saving signal on the basis of the QCL information in terms of the spatial Rx parameters, the sending beam of the PDCCH, and corresponding receiver parameters. Vice versa.

It should be understood that in the embodiment of the present application, a beam used to receive a signal may be understood as a spatial domain reception filter used to receive a signal; a beam used to send a signal may be understood as a spatial domain transmission filter used to send a signal. For two signals sent using a same spatial domain transmission filter, it may be said that there is a QCL relationship between the two signals relative to the spatial Rx parameters.

To put it another way, if there is a QCL relationship between two antenna ports (or in other words, being QCL, satisfying the QCL relationship, or the two antenna ports are QCL), then the terminal device may assume that large-scale properties and/or spatial Rx parameters of signals or channels transmitted via one antenna port may be inferred from signals or channels transmitted via another antenna port. In other words, large-scale properties and/or spatial Rx parameters of signals or channels from one antenna port are the same as large-scale properties and/or spatial Rx parameters of signals or channels of another antenna port. The large-scale properties may include, for example, the aforementioned delay spread, Doppler spread, Doppler shift, average delay, and average gain.

Optionally, the TCI information of the PDCCH control resource set at different time domain positions may be the same or different. Because different PDCCH control resource sets may be configured with different PDCCH search spatial properties, and time and cycle of different PDCCH search spaces may be different, the TCI information of the PDCCH control resource sets at different times may be different.

The embodiment of the present application proposes two methods to determine the QCL information of the power saving signal, which will be described separately below.

### Method 1

Optionally, in Step 320, the terminal device determining the QCL information of the power saving signal according to the TCI information of the PDCCH, includes: the terminal device determines that the QCL information of the power saving signal is the TCI information of the PDCCH control resource set associated with the power saving signal.

The PDCCH control resource set associated with the power saving signal is a PDCCH control resource set that satisfies a predetermined relationship in a time domain and/or frequency domain with the power saving signal.

That is, the PDCCH control resource set and the power saving signal that satisfy the predetermined relationship in the time domain and/or frequency domain are the associated PDCCH control resource set and power saving signal.

The terminal device may use the TCI information of the PDCCH control resource set as QCL information of the power saving signal associated with the PDCCH control resource set. For example, if the TCI information of the PDCCH control resource set indicates that there is a QCL relationship between the reception of the PDCCH in the PDCCH control resource set and the reception of a certain SSB, then, when the terminal device assumes that the TCI information of the power saving signal is the TCI information of the PDCCH control resource set, the terminal device may assume there is also a QCL relationship between the reception of the power saving signal and the reception of the SSB, or assume there is a QCL relationship between the reception of the power saving signal and the reception of the PDCCH in the PDCCH control resource set. For example, the terminal device may use the same receiving port and spatial Rx parameters as the SSB to receive the power saving signal.

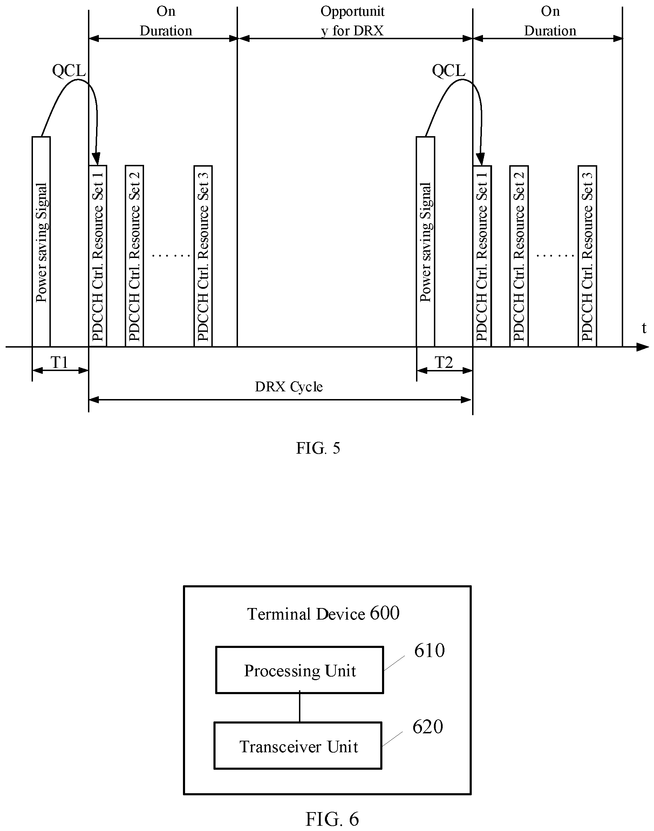

For example, as shown in FIG. 5, it is assumed that the terminal device is in a connected state, a power saving signal associated with a PDCCH control resource set 1 is a power saving signal 1, a predetermined relationship satisfied in a time domain between them, and the predetermined relationship is that a time interval is Tl; a power saving signal associated with a PDCCH control resource set 2 is an power saving signal 2, and a time interval between them is T2 in the time domain;...; in turn; and a power saving signal associated with a PDCCH control resource set N is a power saving signal N, and a time interval between them is Tn in the time domain. The terminal device may determine that QCL information of the power saving signal 1 is TCI information of the PDCCH control resource set 1, QCL information of the power saving signal 2 is TCI information of the PDCCH control resource set 2,..., in turn, and QCL information of the power saving signal N is TCI information of the PDCCH control resource set N.

### Method 2

Optionally, in Step 320, the terminal device determining the QCL information of the power saving signal according to the TCI information of the PDCCH, includes: if the terminal device is about to enter an "On Duration" in a DRX cycle from an "Opportunity for DRX" in the DRX cycle, the terminal device determines that the QCL information of the power saving signal is TCI information of a specific PDCCH control resource set in the "On Duration".

The specific PDCCH control resource set may be, for example, a first PDCCH control resource set in the "On Duration".

When the terminal device is about to enter the "On Duration" of the DRX cycle from the "Opportunity for DRX" in the DRX cycle, since the TCI information of the PDCCH control resource set at different time domain positions in the "On Duration" may be different, the terminal device needs to determine that the TCI information of the power saving signal is TCI information of which PDCCH control resource set in the "On Duration". The network device may configure the QCL information of the power saving signal for the terminal device as TCI information of which specific PDCCH control resource set, or the specific PDCCH control resource set may be agreed in advance, for example, specified in a protocol.

Preferably, as shown in FIG. 6, for example, the specific PDCCH control resource set is a first PDCCH in the "On Duration". The terminal device may receive the power saving signal according to TCI information of the first PDCCH control resource set in the "On Duration". If the TCI information of the first PDCCH control resource set indicates that there is a QCL relationship between reception of the PDCCH in the PDCCH control resource set and reception of a certain SSB, the terminal device assumes that there is also a QCL relationship between reception of the power saving signal and the reception of the SSB.

In this case, the first PDCCH control resource set in the "On Duration" is the PDCCH control resource set associated with the power saving signal.

In an embodiment of the present application, when the terminal device assumes that the QCL information of the power saving signal is TCI information of the associated PDCCH control resource set, there is a QCL relationship between the power saving signal and the PDCCH in the PDCCH control resource set. Or it may also be said that there is a QCL relationship between the power saving signal and a PDCCH in PDCCH search space corresponding to the PDCCH control resource set.

Since the terminal device may determine the QCL information of the power saving signal on the basis of the TCI information of the PDCCH control resource set, for example, it is assumed that the QCL information of the power saving signal is the TCI information of the corresponding PDCCH control resource set, by establishing a QCL relationship between the power saving signal and the PDCCH control resource set, the terminal device may receive the power saving signal on the basis of reception information of the PDCCH, or receive the PDCCH on the basis of reception information of the power saving signal, thereby improving the transmission performance of the PDCCH and the power saving signal.

In Step 330, the terminal device receives the power saving signal on the basis of the QCL information, or the terminal device receives the PDCCH in the PDCCH control resource set on the basis of the QCL information.

Optionally, the QCL information includes QCL information in terms of spatial sending parameters. Wherein, in Step 330, the network device sending the power saving signal and sending the PDCCH in the PDCCH control resource set, includes: the network device sends the PDCCH in the PDCCH control resource set, and sends the power saving signal associated with the PDCCH by using a sending beam of the PDCCH.

That is, the network device sends the PDCCH and the power saving signal by using a same sending beam.

For example, as shown in FIG. 4, the network device sends a power saving signal 1 by using a certain sending beam, and sends the PDCCH by using a same sending beam in a PDCCH control resource set 1 associated with the power saving signal 1; the network device sends a power saving signal 2 by using a certain sending beam, and sends the PDCCH by using a same sending beam in a PDCCH control resource set 2 associated with the power saving signal 2; ...; in turn; the network device sends a power saving signal N by using a certain sending beam, and sends the PDCCH by using a same sending beam in a PDCCH control resource set N associated with the power saving signal N.

For another example, as shown in FIG. 5, the network device sends the power saving signal by using a certain sending beam, and sends the PDCCH in the first PDCCH control resource set in the "On Duration" by using a same sending beam.

Optionally, the QCL information includes QCL information in terms of spatial Rx parameters. Wherein, in Step 330, the terminal device receiving the power saving signal on the basis of the QCL information, includes: the terminal device receives the power saving signal by using a reception beam of the PDCCH, and the spatial Rx parameters corresponding to the reception beam.

For example, as shown in FIG. 4, if the TCI information of the PDCCH control resource set 1 indicates that there is a QCL relationship between reception of a PDCCH in the PDCCH control resource set 1 and reception of SSB 1, then the terminal device receives the PDCCH in the PDCCH control resource set 1 by using a reception beam of the SSB 1, and receives the power saving signal 1 associated with the PDCCH control resource set 1 by using the same reception beam.

As another example shown in FIG. 5, it is assumed that the QCL information of the power saving signal is the TCI information of the first PDCCH control resource set in an "On Duration" of a DRX cycle, if the TCI information of the first PDCCH control resource set in the "On Duration" indicates that there is a QCL relationship between the reception of the PDCCH in the PDCCH control resource set 1 and reception of SSB 2, the terminal device receives the PDCCH in the PDCCH control resource set 1 by using a reception beam of SSB 2, and receives the power saving signal by using the same reception beam and the spatial Rx parameters.

Optionally, the method further includes: the terminal device performs time-frequency synchronization on the basis the power saving signal, and obtains time-frequency synchronization parameters of the power saving signal.

Wherein, the terminal device receiving the PDCCH in the PDCCH control resource set on the basis of the QCL information, includes: the terminal device receives the PDCCH in the PDCCH control resource set by using the time-frequency synchronization parameter of the power saving signal.

If the power saving signal is a sequence and the sequence has a function of time-frequency synchronization, the terminal device may perform the time-frequency synchronization on the basis of the power saving signal, and obtain the time-frequency synchronization parameters such as a time deviation and frequency deviation of the power saving signal, and receive the PDCCH in the PDCCH control resource set on the basis of these time-frequency synchronization parameters, thereby improving reception performance of the PDCCH.

Optionally, the method further includes: the network device determines a timing relationship between the power saving signal and the PDCCH control resource set.

Wherein, the network device sending the power saving signal and sending the PDCCH in the PDCCH control resource set, includes: the network device sends the power saving signal, and sends the PDCCH in the PDCCH control resource set according to the timing relationship.

Accordingly, optionally, the method further includes: the terminal device determines the timing relationship between the power saving signal and the PDCCH control resource set.

The timing relationship may be configured by the network device for the terminal device, or may be preset in advance for, for example, a protocol pre-stored in the terminal device.

In Step 330, the terminal device receiving the power saving signal on the basis of the QCL information, includes: the terminal device receives the power saving signal on the basis of the QCL information and the timing relationship; the terminal device receiving the PDCCH in the PDCCH control resource set on the basis of the QCL information, includes: the terminal device receives the PDCCH in the PDCCH control resource set on the basis of the QCL information and the timing relationship.

The timing relationship between the power saving signal and the PDCCH control resource set, that is, a time relationship between a time when the network device sends the PDCCH in the PDCCH control resource set and a time when the network device sends the power saving signal, is also a time relationship between a time when the terminal device receives the PDCCH in the PDCCH control resource set and a time when the terminal device receives the power saving signal. As shown in FIG. 4 for example, if the timing relationship indicates that the power saving signal is located before its associated PDCCH control resource set by a time interval of Tl, then, after receiving the power saving signal, the terminal device may receive the PDCCH after the time interval of Tl on the basis of the QCL information of the power saving signal. Or, after determining a time position of the PDCCH control resource set, the terminal device may determine a time position of receiving the power saving signal according to the timing relationship.

In the embodiment of the present application, the terminal device may receive the power saving signal on the basis of the QCL information of the power saving signal by determining the QCL information of the power saving signal, thereby improving the transmission performance of the power saving signal.

Optionally, the method further includes: the terminal device performs Radio Resource Management (RRM) measurement on the basis of the power saving signal.

Specifically, if the power saving signal has a measurement function, when the QCL information of the power saving signal is the TCI information of the associated PDCCH control resource set, since the TCI information indicates that there is a QCL relationship between reception of the PDCCH in the PDCCH control resource set and reception of a certain SSB, then there is a QCL relationship between the reception of the power saving signal and the reception of the SSB. Therefore, the power saving signal may have a similar measurement function to the SSB having the QCL relationship.

When the terminal device averages measurement results of a plurality of SSBs, if there is a power saving signal near some SSBs in the plurality of SSBs, the terminal device may not detect these SSBs, but rather detect the same number of power saving signals near these SSBs and average measurement results of these several power saving signals and measurement results of remaining SSBs. For example, when the terminal device periodically performs RRM measurement on the basis of a SSB, if the terminal device receives a power saving signal in an i-th measurement cycle of the SSB, the terminal device may measure the power saving signal without measuring the SSB in the i-th measurement cycle, thereby reducing power consumption of the terminal device. When obtaining the measurement results, the terminal device may still average the measurement results obtained in each measurement cycle, but the measurement results in the i-th measurement cycle are obtained on the basis of the power saving signal measurement in the i-th measurement cycle, not on the basis of the SSB measurement in the i-th measurement cycle. It should be understood that when the terminal device performs RRM measurement according to the SSB and the power saving signal, the measurement is performed on the SSB and the power saving signal sent by a same beam. That is, the measurement results of the SSB in the i-th measurement cycle may be replaced by the measurement results of the power saving signal sent using the same beam in the i-th measurement cycle.

It should be understood that in various embodiments of the present application, the size of the sequence numbers of the above processes does not mean that the execution order is sequential, and the execution order of each process should be determined by its function and internal logic, and should not constitute any limitation on the implementation process of the embodiments of the present application.

The signal transmission method according to an embodiment of the present application has been described in detail above. The device according to the embodiment of the present application will be described below with reference to FIGS. 6 to 9.

FIG. 6 is a schematic block diagram of a terminal device 600 according to an embodiment of the present application. As shown in FIG. 6, the terminal device 600 includes a processing unit 610 and a transceiver unit 620.

The processing unit 610 is configured to determine Quasi-Co-Location (QCL) information of a power saving signal.

The transceiver unit 620 is configured to receive the power saving signal on the basis of the QCL information, or receive a Physical Downlink Control Channel (PDCCH) in a PDCCH control resource set on the basis of the QCL information.

Therefore, by determining the QCL information of the power saving signal, the terminal device may receive the power saving signal on the basis of the QCL information of the power saving signal, thereby improving the transmission performance of the power saving signal.

Optionally, the QCL information includes QCL information in at least one of the following: delay spread, Doppler spread, Doppler frequency shift, average delay, and spatial Rx parameters.

Optionally, the processing unit 610 is specifically configured to: determine the QCL information of the power saving signal according to Transmission Configuration Indication (TCI) information of the PDCCH, wherein, the TCI information of the PDCCH is used to indicate that QCL information of an antenna port of a De Modulation Reference Signal (DMRS) used by the PDCCH is received in the PDCCH control resource set; or, receive configuration information sent by the transceiver unit 620, the configuration information being used to indicate the QCL information.

Optionally, the processing unit 610 is specifically configured to: determine that the QCL information of the power saving signal is TCI information of the PDCCH control resource set associated with the power saving signal; wherein, the PDCCH control resource set associated with the power saving signal is a PDCCH control resource set that satisfies a predetermined relationship in a time domain and/or frequency domain with the power saving signal.

Optionally, if the terminal device is a terminal device that is about to enter an "On Duration" in a Discontinuous Reception (DRX) cycle from an "Opportunity for DRX" in the DRX cycle, the processing unit 610 is specifically configured to: if the terminal device is about to enter the "On Duration" in the DRX cycle from the "Opportunity for DRX" in the DRX cycle, determine that the QCL information of the power saving signal is TCI information of a specific PDCCH control resource set in the "On Duration".

Optionally, the specific PDCCH control resource set is a first PDCCH control resource set in the "On Duration".

Optionally, the TCI information of the PDCCH control resource set at different time domain positions is same or different.

Optionally, the QCL information includes QCL information in terms of the spatial Rx parameters, wherein, the transceiver unit 620 is specifically configured to: receive the power saving signal by using a reception beam of the PDCCH and the spatial Rx parameters corresponding to the reception beam.

Optionally, the processing unit 610 is further configured to: perform time-frequency synchronization on the basis of the power saving signal, and obtain time-frequency synchronization parameters of the power saving signal; wherein, the transceiver unit 620 is specifically configured to: receive the PDCCH in the PDCCH control resource set by using the time-frequency synchronization parameters of the power saving signal.

Optionally, the processing unit 610 is further configured to: determine a timing relationship between the power saving signal and the PDCCH control resource set; wherein, the transceiver unit 620 is specifically configured to: receive the power saving signal on the basis of the QCL information and the timing relationship;
wherein, the transceiver unit 620 is specifically configured to: receive the PDCCH in the PDCCH control resource set on the basis of the QCL information and the timing relationship.

It should be understood that the terminal device 600 may perform the corresponding operations performed by the terminal device in the above method 300, and for the sake of brevity, details are not described herein again.

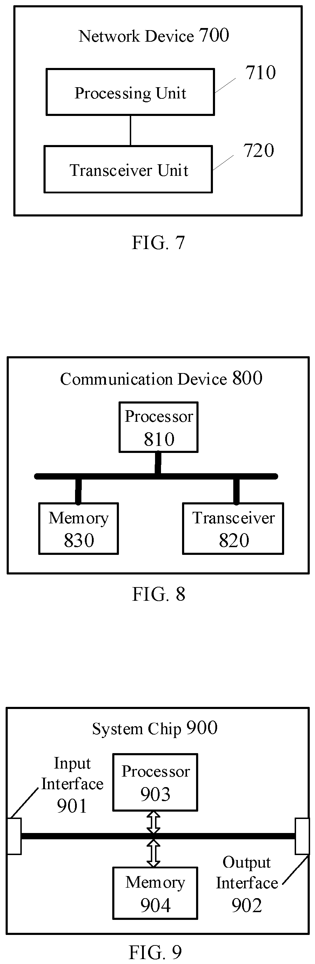

FIG. 7 is a schematic block diagram of a network device 700 according to an embodiment of the present application. As shown in FIG. 7, the network device 700 includes a processing unit 710 and a transceiver unit 720.

The processing unit 710 is configured to generate a power saving signal and a Physical Downlink Control Channel (PDCCH).

The transceiver unit 720 is configured to send the power saving signal generated by the processing unit, and send a PDCCH generated by the processing unit in a PDCCH control resource set, to allow a terminal device to receive the power saving signal or receive the PDCCH in the PDCCH control resource set on the basis of Quasi-Co-Location (QCL) information of the power saving signal.

Therefore, when the energy saving signal and the PDCCH sent by the network device use the same transmission parameters, such as sending beams, etc., the terminal device can receive the energy saving signal based on the QCL information of the energy saving signal and the QCL information of the energy saving signal, thereby improving Transmission performance.

Therefore, when the network device sends the power saving signal and the PDCCH, by using a same transmission parameter, such as a sending beam, etc., it may allow the terminal device to receive the power saving signal on the basis of the QCL information of the power saving signal according to the QCL information of the power saving signa, thereby improving transmission performance of the power saving signal.

Optionally, the QCL information includes QCL information in at least one of the following: delay spread, Doppler spread, Doppler shift, average delay and spatial Rx parameters.

Optionally, the transceiver unit 720 is further configured to: send configuration information to the terminal device, the configuration information being used to indicate the QCL information.

Optionally, the QCL information of the power saving signal is TCI information of the PDCCH control resource set associated with the power saving signal, wherein, the PDCCH control resource set associated with the power saving signal is a PDCCH control resource set that satisfies a predetermined relationship in a time domain and/or frequency domain with the power saving signal; the TCI information of the PDCCH is used to indicate that QCL information of an antenna port of a De Modulation Reference Signal (DMRS) used by the PDCCH is sent in the PDCCH control resource set.

Optionally, the QCL information of the power saving signal is TCI information of a specific PDCCH control resource set in an "On Duration" in a Discontinuous Reception (DRX) cycle.

Optionally, the specific PDCCH control resource set is a first PDCCH control resource set in the "On Duration".

Optionally, the TCI information of the PDCCH control resource set at different time domain positions is same or different.

Optionally, the QCL information comprises QCL information in terms of spatial sending parameters, wherein, the transceiver unit 720 is specifically configured to: send the PDCCH in the PDCCH control resource set, and send the power saving signal associated with the PDCCH by using a sending beam of the PDCCH.

Optionally, the processing unit 710 is further configured to: determine a timing relationship between the power saving signal and the PDCCH control resource set; wherein, the transceiver unit is specifically configured to: send the power saving signal, and send the PDCCH in the PDCCH control resource set according to the timing relationship.

It should be understood that the network device 600 may perform the corresponding operations performed by the network device in the above method 300, and for the sake of brevity, no further details are provided here.

FIG. 8 is a schematic structural diagram of a communication device 800 according to an embodiment of the present application. As shown in FIG. 8, the communication device includes a processor 810, a transceiver 820, and a memory 830, wherein the processor 810, the transceiver 820, and the memory 830 communicate with each other through an internal connection path. The memory 830 is used to store instructions, and the processor 810 is used to execute the instructions stored in the memory 830 to control the transceiver 820 to receive signals or send signals.

Optionally, the processor 810 may call the program code stored in the memory 830 to perform the corresponding operation of the terminal device in the method 300. For the sake of brevity, details are not described herein again.

Optionally, the processor 810 may call the program code stored in the memory 830 to execute the corresponding operation performed by the network device in the method 300. For the sake of brevity, details are not described herein again.

It should be understood that the processor in the embodiment of the present application may be an integrated circuit chip, which has signal processing capabilities. In the implementation process, each step of the foregoing method embodiment may be completed by an integrated logic circuit of hardware in a processor or instructions in the form of software. The foregoing processor may be a general-purpose processor, a Digital Signal Processor (DSP), an Application Specific Integrated Circuit (ASIC), a Field Programmable Gate Array (FPGA), or other programming logic devices, a discrete gate or transistor logic device, and discrete hardware components. The methods, steps, and logical block diagrams disclosed in the embodiments of the present application may be implemented or executed. The general-purpose processor may be a microprocessor or the processor may be any conventional processor or the like. The steps of the method disclosed in conjunction with the embodiments of the present application may be directly embodied and executed by a hardware decoding processor, or may be executed and completed by a combination of hardware and software modules in the decoding processor. The software module may be located in a mature storage medium in the art, such as a random access memory, a flash memory, a read-only memory, a programmable read-only memory or an electrically erasable programmable memory, and a register. The storage medium is located in the memory, and the processor reads the information in the memory and completes the steps of the above method in combination with its hardware.

It may be understood that the memory in the embodiments of the present application may be volatile memory or non-volatile memory, or may include both volatile and non-volatile memory. Wherein, the non-volatile memory may be a Read-Only Memory (ROM), a Programmable ROM (PROM), an Erasable PROM (EPROM), an Electrically EPROM (EEPROM) or a flash memory. The volatile memory may be a Random Access Memory (RAM), which is used as an external cache. By way of example but not limitation, many forms of RAM are available, such as a Static RAM (SRAM), a Dynamic RAM (DRAM), a Synchronous DRAM (SDRAM), a Double SDRAM (DDR SDRAM), an Enhanced SDRAM (ESDRAM), a Synchlink DRAM (SLDRAM) and a Direct Rambus RAM (DR RAM). It should be noted that the memories of the systems and methods described herein are intended to include, but are not limited to these and any other suitable types of memories.

FIG. 9 is a schematic structural diagram of a system chip according to an embodiment of the present application. The system chip 900 of FIG. 9 includes an input interface 901, an output interface 902, at least one processor 903, and a memory 904. The input interface 901, the output interface 902, the processor 903, and the memory 904 are connected to each other through an internal connection path. The processor 903 is used to execute the code in the memory 904.

Optionally, when the code is executed, the processor 903 may implement the corresponding operation performed by the terminal device in the method 300, which will not be repeated them here for brevity.

Optionally, when the code is executed, the processor 903 may implement the corresponding operation performed by the network device in the method 300, which will not be repeated them here for brevity.

It should be understood that in the embodiment of the present invention, "B corresponding to A" means that B is associated with A, and B may be determined according to A. However, it should also be understood that determining B according to A does not mean determining B according to A alone, and B may also be determined according to A and/or other information.

Those of ordinary skill in the art may realize that the units and algorithm steps of the examples described in conjunction with the embodiments disclosed herein can be implemented by electronic hardware, or a combination of computer software and electronic hardware. Whether these functions are executed in hardware or software depends on the specific application of the technical solution and design constraints. Professional technicians can use different methods to implement the described functions for each specific application, but such implementation should not be considered beyond the scope of this application.

Those skilled in the art can clearly understand that for the convenience and conciseness of the description, the specific working process of the system, device and unit described above can refer to the corresponding process in the foregoing method embodiments, which will not be repeated here.

In the several embodiments provided in this application, it should be understood that the disclosed system, device, and method may be implemented in other ways. For example, the device embodiments described above are only schematic. For example, the division of the unit is only a division of logical functions. In actual implementation, there may be other divisions, for example, multiple units or components may be combined or Integration into another system, or some features can be ignored, or not implemented. In addition, the displayed or discussed mutual coupling or direct coupling or communication connection may be indirect coupling or communication connection through some interfaces, devices or units, and may be in electrical, mechanical or other forms.

The units described as separate components may or may not be physically separated, and the components displayed as units may or may not be physical units, that is, they may be located in one place or may be distributed on multiple network units. Some or all of the units may be selected according to actual needs to achieve the purpose of the solution of this embodiment.

In addition, each functional unit in each embodiment of the present application may be integrated into one monitoring unit, or each unit may exist alone physically, or two or more units may be integrated into one unit.

If the functions are implemented in the form of software functional units and sold or used as independent products, they can be stored in a computer-readable storage medium. Based on this understanding, the technical solution of the present application can essentially be a part that contributes to the existing technology or a part of the technical solution can be embodied in the form of a software product. The computer software product is stored in a storage medium and includes several instructions to enable a computer device (which may be a personal computer, server, or network device, etc.) to perform all or part of the steps of the methods described in the embodiments of the present application. The foregoing storage media include: a U disk, a mobile hard disk, a Read-Only Memory (ROM), a Random Access Memory (RAM), a magnetic disk or an optical disk and other media that can store program codes.

The above is only the specific implementation of this application, but the scope of protection of this application is not limited to this. Any person skilled in the art can easily think of changes or replacements within the technical scope disclosed in this application, which should be covered by the protection scope of this application. Therefore, the protection scope of the present application shall be subject to the protection scope of the claims.

## Claims

1. A signal transmission method, comprising:
determining, by a terminal device, Quasi-Co-Location (QCL) information of a power saving signal; and
receiving, by the terminal device, the power saving signal on the basis of the QCL information, or receiving, by the terminal device, a Physical Downlink Control Channel (PDCCH) in a PDCCH control resource set on the basis of the QCL information.

2. The method according to claim 1, wherein, the QCL information comprises QCL information in at least one of:
delay spread, Doppler spread, Doppler shift, average delay and spatial Rx parameters.

3. The method according to claim 1 or claim 2, wherein, determining, by the terminal device, the QCL information of the power saving signal comprises:
determining, by the terminal device, the QCL information of the power saving signal according to Transmission Configuration Indication (TCI) information of the PDCCH, wherein, the TCI information of the PDCCH is used to indicate that QCL information of an antenna port of a De Modulation Reference Signal (DMRS) used by the PDCCH is received in the PDCCH control resource set; or,
receiving, by the terminal device, configuration information sent by a network device, the configuration information being used to indicate the QCL information.

4. The method according to claim 3, wherein, determining, by the terminal device, the QCL information of the power saving signal according to the TCI information of the PDCCH comprises:
determining, by the terminal device, that the QCL information of the power saving signal is TCI information of the PDCCH control resource set associated with the power saving signal,
wherein, the PDCCH control resource set associated with the power saving signal is a PDCCH control resource set that satisfies a predetermined relationship with the power saving signal in a time domain and/or frequency domain.

5. The method according to claim 3, wherein, determining, by the terminal device, the QCL information of the power saving signal according to the TCI information of the PDCCH comprises:
if the terminal device is about to enter an "On Duration" in a Discontinuous Reception (DRX) cycle from an "Opportunity for DRX" in the DRX cycle, determining, by the terminal device, that the QCL information of the power saving signal is TCI information of a specific PDCCH control resource set in the "On Duration".

6. The method according to claim 5, wherein, the specific PDCCH control resource set is a first PDCCH control resource set in the "On Duration".

7. The method according to any one of claims 1 to 6, wherein, the TCI information of the PDCCH control resource set at different time domain positions is same or different.

8. The method according to any one of claims 1 to 7, wherein, the QCL information comprises QCL information in terms of the spatial Rx parameters,
wherein, receiving, by the terminal device, the power saving signal on the basis of the QCL information comprises:
receiving, by the terminal device, the power saving signal by using a reception beam of the PDCCH and the spatial Rx parameters corresponding to the reception beam.

9. The method according to any one of claims 1 to 8, wherein, the method further comprises:
performing, by the terminal device, time-frequency synchronization on the basis of the power saving signal, and obtaining time-frequency synchronization parameters of the power saving signal,
wherein, receiving, by the terminal device, the PDCCH in the PDCCH control resource set on the basis of the QCL information comprises:
receiving, by the terminal device, the PDCCH in the PDCCH control resource set by using the time-frequency synchronization parameters of the power saving signal.

10. The method according to any one of claims 1 to 9, wherein, the method further comprises:
determining, by the terminal device, a timing relationship between the power saving signal and the PDCCH control resource set,
wherein, receiving, by the terminal device, the power saving signal on the basis of the QCL information comprises: receiving, by the terminal device, the power saving signal on the basis of the QCL information and the timing relationship, and
receiving, by the terminal device, the PDCCH in the PDCCH control resource set on the basis of the QCL information comprises: receiving, by the terminal device, the PDCCH in the PDCCH control resource set on the basis of the QCL information and the timing relationship.

11. A signal transmission method, comprising:
sending, by a network device, a power saving signal, and sending a Physical Downlink Control Channel (PDCCH) in a PDCCH control resource set, to allow a terminal device to receive the power saving signal on the basis of Quasi-Co-Location (QCL) information of the power saving signal, or receive the PDCCH in the PDCCH control resource set.

12. The method according to claim 11, wherein, the QCL information comprises QCL information in at least one of:
delay spread, Doppler spread, Doppler shift, average delay and spatial Rx parameters.

13. The method according to claim 11 or claim 12, wherein, the method further comprises:
sending, by the network device, configuration information to the terminal device, the configuration information being used to indicate the QCL information.

14. The method according to any one of claims 11 to 13, wherein, the QCL information of the power saving signal is TCI information of the PDCCH control resource set associated with the power saving signal,
wherein, the PDCCH control resource set associated with the power saving signal is a PDCCH control resource set that satisfies a predetermined relationship with the power saving signal in a time domain and/or frequency domain,
the TCI information of the PDCCH is used to indicate that QCL information of an antenna port of a De Modulation Reference Signal (DMRS) used by the PDCCH is sent in the PDCCH control resource set.

15. The method according to any one of claims 11 to 13, wherein, the QCL information of the power saving signal is TCI information of a specific PDCCH control resource set in an "On Duration" in a Discontinuous Reception (DRX) cycle.

16. The method according to claim 15, wherein, the specific PDCCH control resource set is a first PDCCH control resource set in the "On Duration".

17. The method according to any one of claims 11 to 16, wherein, the TCI information of the PDCCH control resource set at different time domain positions is same or different.

18. The method according to any one of claims 11 to 17, wherein, the QCL information comprises QCL information in terms of spatial sending parameters,
wherein, sending, by the network device, the power saving signal, and sending the PDCCH in the PDCCH control resource set comprises:
sending, by the network device, the PDCCH in the PDCCH control resource set, and sending the power saving signal associated with the PDCCH by using a sending beam of the PDCCH.

19. The method according to any one of claims 11 to 18, wherein, the method further comprises:
determining, by the network device, a timing relationship between the power saving signal and the PDCCH control resource set,
wherein, sending, by the network device, the power saving signal and sending the PDCCH in the PDCCH control resource set comprises:
sending, by the network device, the power saving signal, and sending the PDCCH in the PDCCH control resource set according to the timing relationship.

20. A terminal device, comprising:
a processing unit, configured to determine Quasi-Co-Location (QCL) information of a power saving signal; and
a transceiver unit, configured to receive the power saving signal on the basis of the QCL information, or receive by the terminal device a Physical Downlink Control Channel (PDCCH) in a PDCCH control resource set on the basis of the QCL information.

21. The terminal device according to claim 20, wherein, the QCL information comprises QCL information in at least one of:
delay spread, Doppler spread, Doppler shift, average delay and spatial Rx parameters.

22. The terminal device according to claim 20 or claim 21, wherein, the processing unit is specifically configured to:
determine the QCL information of the power saving signal according to Transmission Configuration Indication (TCI) information of the PDCCH, wherein, the TCI information of the PDCCH is used to indicate that QCL information of an antenna port of a De Modulation Reference Signal (DMRS) used by the PDCCH is received in the PDCCH control resource set; or,
receive, by the transceiver unit, configuration information sent by a network device, the configuration information being used to indicate the QCL information.

23. The terminal device according to claim 22, wherein, the processing unit is specifically configured to:
determine that the QCL information of the power saving signal is TCI information of the PDCCH control resource set associated with the power saving signal,
wherein, the PDCCH control resource set associated with the power saving signal is a PDCCH control resource set that satisfies a predetermined relationship with the power saving signal in a time domain and/or frequency domain.

24. The terminal device according to claim 22, wherein, the processing unit is specifically configured to:
if the terminal device is about to enter an "On Duration" in a Discontinuous Reception (DRX) cycle from an "Opportunity for DRX" in the DRX cycle, determine that the QCL information of the power saving signal is TCI information of a specific PDCCH control resource set in the "On Duration".

25. The terminal device according to claim 24, wherein, the specific PDCCH control resource set is a first PDCCH control resource set in the "On Duration".

26. The terminal device according to any one of claims 20 to 25, wherein, the TCI information of the PDCCH control resource set at different time domain positions is same or different.

27. The terminal device according to any one of claims 20 to 26, wherein, the QCL information comprises QCL information in terms of the spatial Rx parameters,
wherein, the transceiver unit is specifically configured to:
receive the power saving signal by using a reception beam of the PDCCH and the spatial Rx parameters corresponding to the reception beam.

28. The terminal device according to any one of claims 20 to 27, wherein, the processing unit is further configured to:
perform time-frequency synchronization on the basis of the power saving signal, and obtain time-frequency synchronization parameters of the power saving signal,
wherein, the transceiver unit is specifically configured to:
receive the PDCCH in the PDCCH control resource set by using the time-frequency synchronization parameters of the power saving signal.

29. The terminal device according to any one of claims 20 to 28, wherein, the processing unit is further configured to:
determine a timing relationship between the power saving signal and the PDCCH control resource set,
wherein, the transceiver unit is specifically configured to: receive the power saving signal on the basis of the QCL information and the timing relationship, and
wherein, the transceiver unit is specifically configured to: receive the PDCCH in the PDCCH control resource set on the basis of the QCL information and the timing relationship.

30. A network device, comprising:
a processing unit, configured to generate a power saving signal and a Physical Downlink Control Channel (PDCCH); and
a transceiver unit, configured to send the power saving signal generated by the processing unit, and send a PDCCH generated by the processing unit in a PDCCH control resource set, to allow a terminal device to receive the power saving signal on the basis of Quasi-Co-Location (QCL) information of the power saving signal, or receive the PDCCH in the PDCCH control resource set.

31. The network device according to claim 30, wherein, the QCL information comprises QCL information in at least one of:
delay spread, Doppler spread, Doppler shift, average delay and spatial Rx parameters.

32. The network device according to claim 30 or claim 31, wherein, the transceiver unit is further configured to:
send configuration information to the terminal device, the configuration information being used to indicate the QCL information.

33. The network device according to any one of claims 30 to 32, wherein, the QCL information of the power saving signal is TCI information of the PDCCH control resource set associated with the power saving signal,
wherein, the PDCCH control resource set associated with the power saving signal is a PDCCH control resource set that satisfies a predetermined relationship with the power saving signal in a time domain and/or frequency domain,
the TCI information of the PDCCH is used to indicate that QCL information of an antenna port of a De Modulation Reference Signal (DMRS) used by the PDCCH is sent in the PDCCH control resource set.

34. The network device according to any one of claims 30 to 32, wherein, the QCL information of the power saving signal is TCI information of a specific PDCCH control resource set in an "On Duration" in a Discontinuous Reception (DRX) cycle.

35. The network device according to claim 34, wherein, the specific PDCCH control resource set is a first PDCCH control resource set in the "On Duration".

36. The network device according to any one of claims 30 to 35, wherein, the TCI information of the PDCCH control resource set at different time domain positions is same or different.

37. The network device according to any one of claims 30 to 36, wherein, the QCL information comprises QCL information in terms of spatial sending parameters,
wherein, the transceiver unit is specifically configured to:
send the PDCCH in the PDCCH control resource set, and send the power saving signal associated with the PDCCH by using a sending beam of the PDCCH.

38. The network device according to any one of claims 30 to 37, wherein, the processing unit is further configured to:
determine a timing relationship between the power saving signal and the PDCCH control resource set,
wherein, the transceiver unit is specifically configured to:
send the power saving signal, and send the PDCCH in the PDCCH control resource set according to the timing relationship.
